# EUROPEAN PATENT APPLICATION

(11) **EP 4 176 781 A1**
(43) Date of publication of application: **10.05.2023**
(21) Application number: 20944704.4
(22) Date of filing: 03.08.2020
(51) Int. Cl.: A47J 43/046, A47J 43/07, A47J 43/08, A47J 19/00

(54) **LOCKING COMPONENT, ROTARY HEAD, ROTARY ASSEMBLY, SHAFT COUPLING, CONTAINER, AND FOOD PROCESSOR**

(30) Priority: 06.07.2020 CN 202021303584 U; 06.07.2020 CN 202010643126
(71) Applicant: Guangdong Midea Consumer Electric Manufacturing Co., Ltd., Shunde Foshan, Guangdong 528311 (CN)
(72) Inventor: CHRISTOPHER, Burton, Foshan, Guangdong 528311 (CN); HUANG, Qingchu, Foshan, Guangdong 528311 (CN); XU, Jianfei, Foshan, Guangdong 528311 (CN)
(74) Representative: RGTH
(86) International application number: PCT/CN2020/106542
(87) International publication number: WO 2022/007066

(57) **Abstract**

The present application relates to the technical field of materials processing. Provided are a locking component, a rotary head, a rotary assembly, a shaft coupling, a container, and a food processor. Said locking component comprises a housing. The inner wall structure of the housing is provided with a first opening groove. The bottom of the first opening groove is provided with a first movement surface. The end of the first movement surface that is nearer to the opening of the first opening groove is the locking end. The end of the first movement surface that is farther from the opening of the first opening groove is the unlocking end. A first movable body is arranged in the first opening groove, and moves along the first movement surface; a first elastic component is arranged in said first opening groove. The first elastic component causes the first movable body to stay at the locking end or unlocking end of the first movement surface. The locking component of the present application is convenient for unidirectional locking and convenient to release; the rotary head is detachable, is convenient to clean, and is reliably connected to a driving assembly when working, increasing work stability and safety.

## Description

### CROSS-REFERENCE TO RELATED APPLICATION

The present application claims priority to Chinese patent applications, entitled "Locking Component, Rotary Head, Rotary Assembly, Shaft Coupling, Container, and Food Processor", No. 202010643126.6, filed on July 6, 2020, and entitled "Locking Component, Rotary Head, Rotary Assembly, Shaft Coupling, Container, and Food Processor", No. 202021303584.7, filed on July 6, 2020, the disclosures of which are hereby incorporated by reference in their entity.

### TECHNICAL FIELD

The present application relates to the technical field of material processing, in particular to a locking component, a rotary head, a rotary assembly, a shaft coupling, a container and a food processor.

### BACKGROUND

With the development of science and technology, mixing device, such as dough kneading machine, soybean milk machine, juice extractor, and high speed blender, is more and more used in people's daily life. These mixing devices are driven to cut and/or mix materials automatically by driving stirring cutters or stirring paddles or other similar parts to mix through driving shafts.

However, in order to ensure reliable connection between the stirring cutters or stirring paddles or the like and the driving shafts when the driving shafts are rotating, so that these parts won't be thrown out of the mixing device, most of the existing stirring cutters or stirring paddles or the like are fixed on the driving shafts. As a result, the existing stirring cutters or stirring paddles or the like are not easily disassembled, or it requires a lot of time and effort even if disassembled, which makes it difficult for the user to clean the stirring cutters or stirring paddles and the bottoms of the mixing devices after using them, leading to one of the main dissatisfactions of the user.

In addition, when the user directly reaches their hand into the mixing device having stirring cutters for cleaning, it's easy to cut his/her hand by the sharp cutters, which is another dissatisfaction of the user.

Moreover, a mixing device generally includes a stirring cup and a base. The output end of the power mechanism in the base is connected to the connection end of the stirring assembly of the stirring container, then the power mechanism can drive the stirring assembly to rotate so as to cut and/or mix materials in the stirring container automatically.

Nevertheless, in the related art, the output end of the power mechanism and the connection end of the stirring assembly are connected by a plurality of protrusions and a plurality of grooves. When it's needed to place the stirring cup on the base, it is necessary to accurately align the plurality of protrusions and the plurality of grooves, which requires to continually rotate the stirring cup to ensure that the plurality of protrusions can be inserted into the plurality of grooves, which is inconvenient and time-consuming, and it is also one of the main dissatisfactions of the user. In addition, in the stirring process of the mixing device, since the heat generated at the junctions of the protrusions and the grooves is large, the requirement for the mixing time is high, for example, the mixing time needs to be controlled in a short time, and for the materials that are difficult to stir or cut, it is even necessary to suspend for a period of time for heat dissipation, and wait for the connections between the protrusions and the grooves to cool and then continue to stir or cut, which brings great inconvenience to the user. Moreover, it is difficult to avoid the gaps between the protrusions and the grooves, which leads to large noise and vibration in the working process, affecting the user's feeling of use, which is also one of the main dissatisfactions of the user.

### SUMMARY

An objective of the present application is to solve at least one of the technical problems existing in the prior art or related art.

In a first aspect, the present application provides a locking component to facilitate locking and unlocking.

In a second aspect, the present application provides a rotary head and a rotary assembly to solve the problem that the existing rotary head is not easy to disassemble.

In a third aspect, the present application provides a container and a food processor to solve the problem that users are not easy to clean mixing device or even prone to cut their hands due to the inconvenience of removing the rotary head.

In a fourth aspect, the present application provides a shaft coupling and a rotary assembly to facilitate the assembly and disassembly between the rotary head and a driving shaft assembly, and the shaft coupling and the rotary assembly can be bidirectionally locked with the driving shaft assembly.

In a fifth aspect, the present application provides a container and a food processor to solve the problems of inconvenient connection, large heat generation, large vibration and high noise between the driving shaft assembly of existing container body and the driving shaft assembly of existing base.

In order to solve the technical problems above, in a first aspect, embodiments of the present application provide a locking component, including:
a housing, where, an inner wall of the housing is provided with a first opening groove, a bottom of the first opening groove is provided with a first movement surface, an end of the first movement surface proximal to an opening of the first opening groove is a locking end, and an end of the first movement surface distal to the opening of the first opening groove is an unlocking end;
a first movement body, provided in the first opening groove and movable along the first movement surface; and
a first elastic part, provided in the first opening groove, where the first elastic part is capable of maintaining the first movement body at the locking end or the unlocking end of the first movement surface.

In another embodiment of the present application, the inner wall of the housing is further provided with a second opening groove, a bottom of the second opening groove is provided with a second movement surface, and a tilt direction of the second movement surface is opposite to a tile direction of the first movement surface;
an end of the second movement surface proximal to an opening of the second opening groove is a locking end, and an end of the second movement surface distal to the opening of the second opening groove is an unlocking end;
a second movement body is provided in the second opening groove and the second movement body is movable along the second movement surface; and
a second elastic part is provided in the second opening groove, and the second elastic part is capable of maintaining the second movement body at the locking end or the unlocking end of the second movement surface.

In an embodiment of the present application, a plurality of the first opening grooves are provided, the plurality of first opening groove are disposed at an interval on the inner wall of the housing, and a length direction of the plurality of first opening grooves extends along an axial direction of the housing.

In an embodiment of the present application, a plurality of the second opening grooves are provided, the plurality of second opening grooves are disposed at an interval on the inner wall of the housing, and a length direction of the plurality of second opening grooves extends along an axial direction of the housing.

In an embodiment of the present application, the first opening groove and the second opening groove is provided in pairs.

In an embodiment of the present application, the first elastic part is installed at the unlocking end of the first movement surface or at a position near the unlocking end of the first movement surface; the first elastic part, when in a natural state, maintains the first movement body at the locking end of the first movement surface, and an outer surface of the first movement body facing towards the opening of the first opening groove is tangent to a circumference of the inner wall of the housing.

In an embodiment of the present application, the second elastic part is installed at the unlocking end of the second movement surface or at a position near the unlocking end of the second movement surface; the second elastic part, when in a natural state, maintains the second movement body at the locking end of the second movement surface, and an outer surface of the second movement body towards the opening of the second opening groove is tangent to a circumference of the inner wall of the housing.

In an embodiment of the present application, a maximum width between opposite sidewalls of the first opening groove is larger than a width of the opening of the first opening groove, and a diameter of the first movement body is larger than the width of the opening of the first opening groove and smaller than the maximum width between the opposite sidewalls of the first opening groove.

In an embodiment of the present application, a sidewall of the first opening groove at the unlocking end of the first movement surface is provided with a first installation groove of the first elastic part, and a tilt direction of the first installation groove is consistent with the tile direction of the first movement surface.

In an embodiment of the present application, a maximum width between opposite sidewalls of the second opening groove is larger than a width of the opening of the second opening groove, and a diameter of the second movement body is larger than the width of the opening of the second opening groove and smaller than the maximum width between the opposite sidewalls of the second opening groove.

In an embodiment of the present application, a sidewall of the second opening groove at the unlocking end of the second movement surface is provided with a second installation groove of the second elastic part, and a tilt direction of the second installation groove is consistent with the tile direction of the second movement surface.

In an embodiment of the present application, the sidewall of the first opening groove at the locking end of the first movement surface is constructed as a first arc surface matching the outer surface of the first movement body.

In an embodiment of the present application, the sidewall of the second opening groove at the locking end of the second movement surface is constructed as a second arc surface matching the outer surface of the second movement body.

In an embodiment of the present application, both the first movement body and the second movement body are roller pins, rollers or balls, and both the first elastic part and the second elastic part are springs.

In an embodiment of the present application, at least one end along an axial direction of the housing has an end cover, the end cover has a central through hole, and an inner diameter of the central through hole is not small than that of an axial through hole of the housing.

In a second aspect, embodiments of the present application further provide a rotary head, including:
an installation sleeve, a lower end of the installation sleeve having an installation space;
the locking component, is fixed in the installation space through the housing; and
a rotating actuator, fixed outside the installation sleeve.

In an embodiment of the present application, an upper end of the installation sleeve bulges upwards to form a connecting portion; and an annular convex platform is constructed outside the installation sleeve at an opening side of the installation space, the rotating actuator is sleeved on an outer side of the installation sleeve and abuts on the annular convex platform, the connecting portion is connected to a handle sleeve, and the handle sleeve is sleeved on the outer side of the installation sleeve and is pressed tightly on the rotating actuator.

In an embodiment of the present application, the rotary head further includes a sealing part, the sealing part is provided at a lower end of the locking component; and
the sealing part is at least partially provided in the installation space and located at an opening side of the installation space.

In an embodiment of the present application, the rotary head further includes a first magnetic part fixed at the opening side of the installation space.

In an embodiment of the present application, the rotating actuator includes rotating knife, rotating hook, rotating claw, rotating rod or rotating paddle, or any combination thereof.

In a third aspect, embodiments of the present application further provide a rotary assembly, including a driving assembly and the rotary head, where, the rotary head is sleeved on the driving assembly, and the driving assembly contacts with the first movement body.

In an embodiment of the present application, the rotary assembly further includes a second magnetic part, which is fixed on the driving assembly and is provided opposite to the first magnetic part of the rotary head, and the first magnetic part and the second magnetic part magnetically attract each other.

In a fourth aspect, embodiments of the present application further provide a container, including a container body, further including: the rotary assembly, an end of the driving assembly is installed in the container body, and the rotary head is sleeved at the other end of the driving assembly through the housing.

In a fifth aspect, embodiments of the present application further provide a food processor, including the container, and the food processor can be soybean milk machine, high speed blender, juice extractor, egg beater, dough kneading machine, food mixer, air fryer, shredder, filament planer, self-cooking pan, frying pan, soup-making machine or self-frying pan.

In a sixth aspect, embodiments of the present application further provide a shaft coupling, including a shaft coupling body, where a first end of the shaft coupling body is provided with a first connecting hole and a second end of the shaft coupling body is provided with a second connecting hole. The shaft coupling further includes:
the locking component; where
the housing is fixed in the first connecting hole and is sleeved on a first driving shaft assembly, and the second connecting hole is fixedly connected to a second driving shaft assembly.

In an embodiment of the present application, the first connecting hole and the second connecting hole are coaxially arranged and not communicated with each other.

In a seventh aspect, the embodiments of the present application further provide a rotary assembly, including a first driving shaft assembly and a second driving shaft assembly, further including: the shaft coupling which is sleeved on the first driving shaft assembly through the housing, the first movement body contacts with the first driving shaft assembly, and the second driving shaft assembly is fixedly connected to the second connecting hole.

In an eighth aspect, embodiments of the present application further provide a container, including a container body and a base, further including: the rotary assembly, where, one of the first driving shaft assembly and the second driving shaft assembly is connected to the container body and extends into the container body, and the other one of the first driving shaft assembly and the second driving shaft assembly is connected to the base.

In an embodiment of the present application, an end of the first driving shaft assembly or the second driving shaft assembly extended into the container body is provided with a rotating actuator; the base is provided with a power mechanism; and an end of the first driving shaft assembly or the second driving shaft assembly connected to the base is connected to the power mechanism.

In a ninth aspect, embodiments of the present application further provide a food processor, including the container according to the eighth aspect, which can be soybean milk machine, high speed blender, juice extractor, egg beater, dough kneading machine, food mixer, air fryer, shredder, filament planer, self-cooking pan, frying pan, soup-making machine or self-frying pan.

Compared with the related art, the embodiments of the present application have the following beneficial effects.

Embodiments of the present application provide a locking component, where, an inner wall of the housing is provided with a first opening groove, a bottom of the first opening groove is provided with a first movement surface, an end of the first movement surface proximal to an opening of the first opening groove is a locking end, and an end of the first movement surface distal to the opening of the first opening groove is an unlocking end; a first movement body, which is provided in the first opening groove and can move along the first movement surface; and a first elastic part, which is provided in the first opening groove, and the first elastic part can maintain the first movement body at the locking end or the unlocking end of the first movement surface. When the driving assembly to be assembled is inserted into the housing, the first movement body contacts with the driving assembly to be assembled. Since there is no gap between the first movement body and the driving assembly to be assembled, when the driving assembly rotates from the unlocking end to the locking end, the first movement body is locked on the driving assembly to be assembled, and the locking component can rotate synchronously with the driving assembly. When the driving assembly is not driven by external force, the first movement body is held against the driving assembly only by the elastic force of the first elastic part. Therefore, the locking component and the driving assembly can be separated along the axial direction of the driving assembly. It is only needed to overcome elastic force of the first elastic part and friction between the locking component and the driving assembly, which is very convenient and simple for consumers or users. Or when the driving assembly rotates from the locking end to the unlocking end, the driving assembly drives the first movement body to move along the first movement surface towards the unlocking end and presses the first elastic part. Since the space of the first opening groove at the unlocking end is large, when the first movement body moves at the unlocking end, there is a gap between the first movement body and the driving assembly. When the driving assembly continues to rotate, the locking component remains stationary and plays a unidirectional locking role, and it is easy to separate the locking component and the driving assembly along the axial direction of the driving assembly. That is, when the driving assembly does not rotate or the driving assembly rotates from the locking end to the unlocking end, it can be easily separated the locking part and the driving assembly along the axial direction of the driving assembly; and when the driving assembly the is forced to rotate from the unlocking end to the locking end, the locking component is driven by the driving assembly to rotate in the same direction with the driving assembly, and the locking component may be also subjected to an external force, which is opposite to the rotating direction of the driving assembly. At this time, due to the two opposite forces, the lock between the locking component and the driving assembly is further strengthened under the elastic force of the first elastic part. That is, when the driving assembly is forced to rotate from the unlocking end to the locking end, the locking component and the driving assembly are in a locked state, and the locking component cannot be disengaged from the driving assembly.

When the locking component needs to be re-locked with the driving assembly, it only needs to rotate the driving assembly along the unlocking end towards the locking end. At this time, the first movement body moves towards the locking end along the first movement surface under the elastic force of the first elastic part. When the first movement body moves at the locking end, it contacts with the driving assembly and is locked on the driving assembly. Therefore, the locking component can rotate synchronously with the driving assembly.

When it is needed to remove the locking component, only when the driving assembly does not rotate or the driving assembly rotates from the locking end to the unlocking end, the locking component can be directly pulled out from the driving assembly to realize the separation of the locking component and the driving assembly; and for the case of fixed rotary assembly outside the housing, it is convenient to clean the rotary assembly.

Embodiments of the present application provide a rotary head, where, the locking component is fixed in the installation sleeve, the rotary head is sleeved on the driving assembly to be assembled through the housing, for example, on the driving shaft, and the first movement body in the housing contacts with the driving shaft to be assembled. When the driving shaft is rotated to make the first movement body locked on the driving shaft, the rotary head and the driving shaft can rotate synchronously. When the driving shaft does not rotate, the rotary head can be removed directly along the axial direction of the driving shaft. When the first movement body moves at the unlocking end driven by the reverse rotation of the driving shaft, there is a gap between the first movement body and the driving shaft, and when the driving shaft rotates, the rotary head is fixed, thereby realizing the unidirectional locking and convenient disassembly of the rotary head.

When the rotary head needs to be removed, the rotary head can be pulled out from the driving assembly by only applying a small amount of force; and convenient disassembly facilitates the cleaning of the rotary head. Moreover, the installation sleeve, the locking component and the rotating actuator together form an assembly, and the rotary head is disassembled and assembled as a whole, with no other extra parts involved, avoiding situations where one or more parts are missing. The disassembly and assembly are fast, and it does not need disassembly tools or the users' checking on whether the disassembly and assembly are in place. What's more, it can be disassembled repeatedly.

In addition, the locking component is used as the part connected to the driving assembly. When the rotary head is working, the first movement body is always stuck on the outer wall of the driving assembly, which can ensure that there is no gap between the driving assembly and the housing, thereby reducing noise and vibration when the rotary head is rotating, and reducing the heat conduction between the rotary head and the driving assembly.

Embodiments of the present application provide a container, by providing the driving assembly and the rotary head connected with the driving assembly in the container body, the rotary head can be tightly connected with the driving assembly when it is working, and when needed, a disassembly can be completed by either pulling out the rotary head directly or just reversely turning the rotary head by an angle. It is convenient to disassemble and clean the rotary head, and it is also convenient to clean the bottom of the container after the rotary head is disassembled, so as to avoid the residue gathering at the bottom of the container, especially a position around the bottom of the driving assembly. Thus, the container can be cleaned thoroughly without any sanitary dead angle, then the user's complaints can be addressed and the users' satisfaction can be improved.

An embodiment of the present application provides a food processor, such as soybean milk machine, high speed blender, juice extractor, egg beater or dough kneading machine, etc., which is equipped with the container above. For the food processor, it is also possible to achieve reliable connection and convenient disassembly of the rotary head. Thus it is convenient to remove the rotary head and clean it. It is also convenient to remove the rotary head and clean the bottom of the food processor after removing the rotary head. Thus, the food processor can be thoroughly cleaned without cleaning any dead angle. Thus, users need not to put their hands into the food processor to clean it, and there is no danger of cutting users' hand. The safety use improves users' satisfaction and the premium capacity of product.

Embodiments of the present application provide a shaft coupling. By fixing the locking component in the shaft coupling body, it only needs to insert the first driving shaft assembly, such as the driving shaft, into the housing or sleeve the housing onto the driving shaft when installing. Thus, the installation is convenient and fast without alignment and adjustment of installation angle.

The locking component is used as a part to connect to the first driving assembly. When the shaft coupling is working, the first movement body keeps locked on the outer wall of the first driving shaft assembly, which can ensure that there is no gap between the first driving shaft assembly and the housing, so as to reduce noise and vibration during the rotation of the shaft coupling.

Embodiments of the present application provide a rotary assembly, including the shaft coupling, the first driving shaft assembly and the second driving shaft assembly, where, the shaft coupling is fixedly connected to the second driving shaft assembly; and the shaft coupling is sleeved on the first driving shaft assembly through the housing. Thus, the installation of the rotary assembly is very convenient, without alignment and adjustment of any installation angle.

The container provided by the embodiments of the present application includes a container body and a base, where, one of the first driving shaft assembly and the second driving shaft assembly is connected to the container body and extends into the container body, and the other one of the first driving shaft assembly and the second driving shaft assembly is connected to the base. The first driving shaft assembly and the second driving shaft assembly are connected through the shaft coupling, and when assembling, all that is required is to insert the first driving shaft assembly into the housing. Thus, the installation is convenient, and there is no need to rotate the container body to adjust angle, so the installation is also fast, time-saving and labor-saving. When the container is working, the housing can be clamped with the first driving shaft assembly to ensure that there is no gap between the two, thus the rotation is more stable, the vibration and noise are small, and the heat generation is relatively small, which solves users' dissatisfaction.

Embodiments of the present application provide a food processor, such as soybean milk machine, high speed blender, juice extractor, egg beater, or dough kneading machine, etc., being equipped with the container above, which can also realize the rapid connection and convenient disassembly between the container body and the base. It ensures that there is no gap between the container body and the base when the food processor is working, thus the rotation is more stable with small vibration, noise and heat generation, which improves users' satisfaction and the premium capacity of product.

### BRIEF DESCRIPTION OF DRAWINGS

FIG.1 is a cross-sectional view of a locking component as a one-way locking component according to an embodiment of the present application, wherein, the locking component is locked.
FIG.2 is a cross-sectional view of a locking component as a one-way locking component according to an embodiment of the present application, wherein, the locking component is unlocked.
FIG.3 is an exploded structure view of a locking component according to an embodiment of the present application.
FIG.4 is a cross-sectional view of a locking component as a two-way locking component according to another embodiment of the present application, wherein, the locking component is locked.
FIG.5 is a cross-sectional view of a locking component as a two-way locking component according to another embodiment of the present application, wherein, the locking component is unlocked.
FIG.6 is an exploded structure view of a locking component according to another embodiment of the present application.
FIG.7 is a front structure view of the locking component according to two embodiments of the present application.
FIG.8 is a perspective structure view of the locking component according to two embodiments of the present application.
FIG.9 is an axial section structure view of a rotary head without a rotating actuator according to an embodiment of the present application.
FIG.10 is an axial section structure view of a rotary head according to an embodiment of the present application.
FIG.11 is an axial section structure view of a driving shaft according to an embodiment of the present application.
FIG.12 is an axial section structure view of a rotary assembly having a first magnetic part and a second magnetic part according to an embodiment of the present application.
FIG.13 is an axial section structure view of a shaft coupling according to an embodiment of the present application.
FIG.14 is a structure view of a container having a shaft coupling according to an embodiment of the present application.
FIG.15 is a partial enlargement view at A in FIG.14.

Reference numerals: installation sleeve 1; installation space 11; connecting portion 12; handle sleeve 13; annular convex platform 14; sealing part 15; locking component 2; housing 21; first movement body 22; second movement body 23; first opening groove 24; first movement surface 24-1; second opening groove 25; second movement surface 25-1; first elastic part 26; second elastic part 27; end cover 28; rotating actuator 3; driving shaft 4; annular hollow cover body 41; first magnetic part 5; second magnetic part 6; shaft coupling body 7; first connecting hole 71; second connecting hole 72; first driving shaft 8; second driving shaft 9; container body 10; base 20; fastening part 30.

### DETAILED DESCRIPTION OF THE EMBODIMENTS

The specific implementations of the present application are further described in detail below in conjunction with the drawings and embodiments. The following embodiments are intended to illustrate the present application but are not intended to limit the scope of the present application.

In the description of the present application, it is to be noted that unless otherwise stated, the orientation or positional relations specified by terms such as "central", "longitudinal", "transverse", "upper", "lower", "front", "back", "left", "right", "vertical", "horizontal", "top", "bottom", "inner", "outer" etc., are based on the orientation or positional relations shown in the drawings, which is merely for convenience of description of the present application and to simplify description, but does not indicate or imply that the stated device or element must have the particular orientation and be constructed and operated in a particular orientation, and thus it is not to be construed as limiting the present application. Furthermore, the terms "first", "second", "third" and the like are used for descriptive purposes only and are not to be construed as indicating or implying a relative importance.

In the description of the present application, it is to be noted that unless explicitly stated and defined otherwise, the terms "installed", "connected to," and "connected" shall be understood broadly, for example, it may be either fixedly connected or detachably connected, or can be integrated; it may be either mechanically connected, or electrically connected; it may be either directly connected, or indirectly connected through an intermediate medium; or it may be the internal communication of two elements. The specific meanings of the terms above in the present application can be understood by a person skilled in the art in accordance with specific conditions.

In addition, in the description of the present application, unless otherwise statement, the terms "a plurality of", "a plurality strips of", and "a plurality sets of" means two or more.

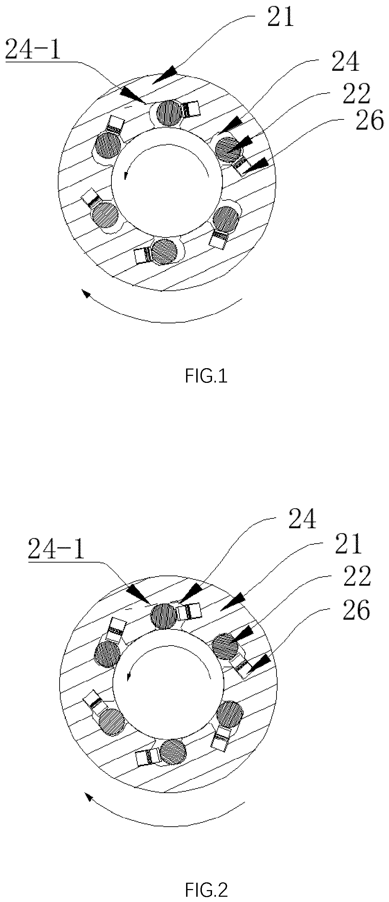

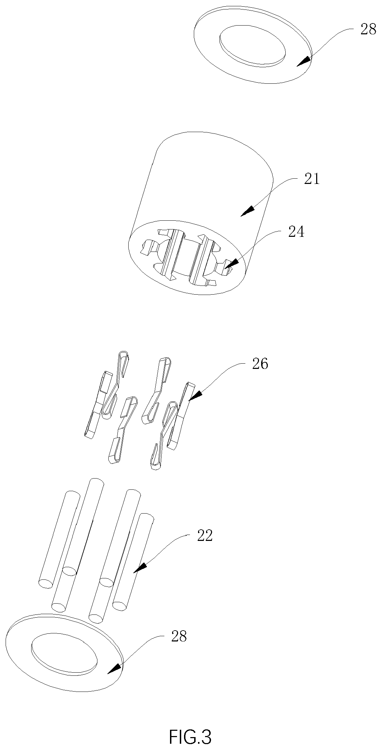

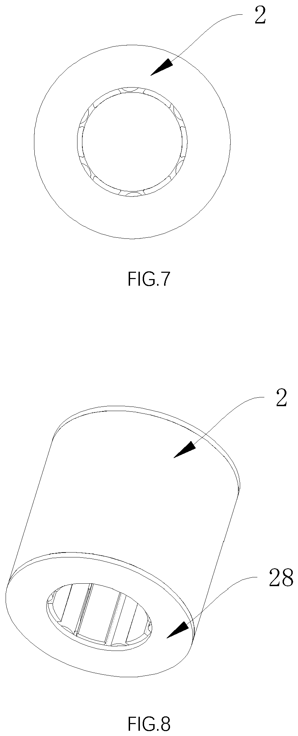

In a first aspect, refer to FIGs.1-3, 7, and 8, a locking component 2 provided by the embodiments of the present application, includes a housing 21, a first movement body 22 and a first elastic part 26.

Specifically, the housing 21 has an axial through hole. A first opening groove 24 is configured on an inner wall of the housing 21, that is, an inner wall of the axial through hole. An opening of the first opening groove 24 faces an axis of the housing 21. A first movement surface 24-1 is provided on a groove bottom of the first opening groove 24, and the groove bottom is a sidewall opposite to the opening. The first opening groove 24 is composed of the opening, the sidewall opposite to the opening (i.e., the groove bottom) and sidewalls located on two sides relative to the groove bottom. Wherein, an end of the first movement surface 24-1 proximal to the opening of the first opening groove 24 is a locking end, and an end of the first movement surface 24-1 distal to the opening of the first opening groove 24 is an unlocking end.

In this embodiment, the first movement surface 24-1 can be any one of bevel surface, arc surface and curved surface, or the first movement surface 24-1 can be any combination of the bevel surface, arc surface and curved surface, as long as the first movement body 22 is in a location far from the opening when unlocking, and the first movement body 22 is close to the opening when locking. The specific form of the first movement surface 24-1 can be selected according to actual needs, and is not specifically defined in this embodiment. In this embodiment, the first movement surface 24-1 being a bevel surface is taken as an example, where a dotted line in FIGs.1-2 is an extension line of the first movement surface 24-1.

Wherein, the first movement body 22 is provided in the first opening groove 24 and it can move along the first movement surface 24-1, so that it can switch between an unlocking end and a locking end according to a need.

In order to facilitate installation of the first movement body 22, the first movement body 22 can be inserted into the first opening groove 24 from either of two ends of the first opening groove 24.

Wherein, the first elastic part 26 is provided in the first opening groove 24, and the first elastic part 26 can maintain the first movement body 22 at the locking end or the unlocking end of the first movement surface 24-1.

Specifically, the first elastic part 26 can be installed at the unlocking end of the first movement surface 24-1 or a position near the unlocking end of the first movement surface 24-1, and faces the first movement body 22. The first elastic part 26, in a natural state, maintains the first movement body 22 at the locking end of the first movement surface 24-1, and an outer surface of the opening of the first movement body 22 towards the first opening groove 24 is tangent to a circumference of the inner wall of the housing 21, which allows an outmost end of the first movement body 22 to be on an inner circumference of the axial through hole of the housing 21.

When the driving assembly to be assembled is inserted into the housing 21, a direction indicated by an arrow in housing 21 as shown in FIGs.1-2 is a rotation direction of the driving assembly. The first movement body 22 is in contact with the driving assembly to be assembled. Since there is no gap between the first movement body 22 and the driving assembly to be assembled, when the driving assembly rotates from the unlocking end to the locking end, the first movement body 22 is locked on the driving assembly to be assembled, and the locking component 2 can rotate synchronously with the driving assembly. When the driving assembly is not driven by external force to rotate, only elastic force of the first elastic part 26 holds the first movement body 22 against the driving assembly, then the locking component 2 can be separated from the driving assembly along an axial direction of the driving assembly, and only the elastic force of the first elastic part 26 and the friction between the two need to be overcome, which is very convenient and simple for consumers or users. Or when the driving assembly rotates from the locking end to the unlocking end, the driving assembly drives the first movement body 22 to move towards the unlocking end along the first movement surface 24-1 and presses the first elastic part 26. Since the space of the first opening groove 24 at the unlocking end is large, when the first movement body 22 moves to the unlocking end, there is a gap between the first movement body 22 and the driving assembly, and when the driving assembly continues rotating, the locking component 2 remains stationary, so as to achieve the effect of one-way locking. At the same time, it is easy to separate the locking component 2 from the driving assembly along an axial direction of the driving assembly. That is, when the driving assembly does not rotate or the driving assembly rotates from the locking end to the unlocking end, it is easy to separate the locking component 2 from the driving assembly along the axial direction of the driving assembly. When the driving assembly is forced to rotate from the unlocking end to a direction where the locking end is located, in addition to rotate in a same direction with the driving assembly driven by the driving assembly, the locking component 2 can also be subjected to an external force to rotate in an opposite direction to the rotating direction of the driving assembly. As shown in FIGs1-2, a direction of an arrow outside the housing 21 is a direction of the external force. Through the external force, the locking between the driving assembly and the locking component 2 will be further strengthened. The external force can be a resistance of food, water, air, etc., in a mixing cup. And, due to the two opposite forces, and the elastic force of the first elastic part borne by the locking component 2 and the driving assembly, the locking component 2 and the driving assembly are further locked, that is, when the driving assembly is forced to rotate from the unlocking end to the locking end, the locking component 2 and the driving assembly are locked, and the locking component 2 cannot be separated from the driving assembly.

When there is a need to lock the locking component 2 with the driving assembly again, it only needs to rotate the driving assembly along the unlocking end towards the locking end. At this point, the first movement body 22 moves along the first movement surface 24-1 towards the locking end under the elastic force of the first elastic part 26. When the first movement body 22 moves to the locking end, it contacts with the driving assembly and locks on the driving assembly. And, the locking component 2 can rotate synchronously with the driving assembly.

When the locking component 2 is needed to be removed, the locking component 2 can be pulled out directly from the driving assembly when the driving assembly does not rotate or rotates from the locking end to the unlocking end, so as to realize the separation of the locking component 2 and the driving assembly. For the case of the rotary assembly fixed outside the housing 21, it is convenient to clean the rotary assembly.

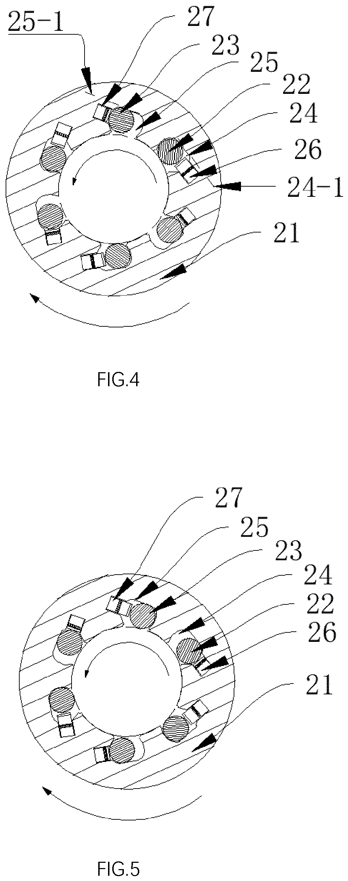

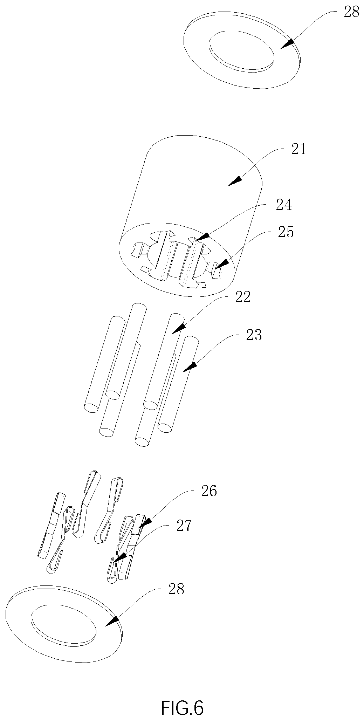

In another specific embodiment, refer to FIGs.4-6, 7 and 8, the inner wall of the housing 21 is further provided with a second opening groove 25, and a groove bottom of the second opening groove 25 is provided with a second movement surface 25-1. A tilt direction of the second movement surface 25-1 is opposite to a tile direction of the first movement surface 24-1. For example, the tilt direction can be either clockwise or counterclockwise. If the first movement surface 24-1 points to the locking end from the unlocking end, then the second movement surface 25-1 can point to the unlocking end from the locking end.

In this embodiment, an end of the second movement surface 25-1 proximal to an opening of the second opening groove 25 is the locking end, and an end of the second movement surface 25-1 distal to the opening of the second opening groove 25 is the unlocking end.

In this embodiment, the second movement surface 25-1 can be any one of bevel surface, arc surface and curved surface, or the second movement surface 25-1 can be any combination of bevel surface, arc surface and curved surface, as long as the second movement body 23 is in a location far from the opening when unlocking, and the second movement body 23 is close to the opening when locking. The specific form of the second movement surface 25-1 can be selected according to actual needs, and is not specifically defined in this embodiment. In this embodiment, the second movement surface 25-1 being a bevel surface is taken as an example, where a dotted line in FIG.4 is an extension line of the second movement surface 25-1.

The second movement body 23 is provided in the second opening groove 25 and the second movement body 23 can move along the second movement surface 25-1, thus it can switch between the unlocking end and the locking end according to a requirement.

A second elastic part 27 is provided in the second opening groove 25, and the second elastic part 27 can maintain the second movement body 23 at the locking end or the unlocking end of the second movement surface 25-1.

Specifically, the second elastic part 27 can be installed at the unlocking end of the second movement surface 25-1 or a position near the unlocking end of the second movement surface 25-1. In a natural state, the second elastic part 27 maintains the second movement body 23 at the locking end of the second movement surface 25-1, and an outer surface of the opening of the second movement body 23 towards the second opening groove 25 is tangent to a circumference of the inner wall of the housing 21.

When the driving assembly to be assembled is inserted into the housing 21, as shown in FIGs.4-5, a direction indicated by an arrow in the housing 21 is a rotation direction of the driving assembly. The first movement body 22 and the second movement body 23 are in contact with the driving assembly to be assembled. When the driving assembly rotates from the unlocking end to the locking end of the first movement surface 24-1, the first movement body 22 is locked on the driving assembly to be assembled, and the locking component 2 can rotate synchronously with the driving assembly. At this time, in addition to rotate in a same direction with the driving assembly driven by the driving assembly, the locking component 2 may also be subjected to an external force having an opposite direction to the rotating direction of the driving assembly. As shown in FIGs. 4-5, a direction of an arrow outside the housing 21 is a direction of the external force. Through the external force, the locking between the driving assembly and the locking component 2 will be further strengthened. The external force can be a resistance of food, water, air, etc., in a mixing cup. At the same time, the second movement body 23 moves towards the unlocking end along the second movement surface 25-1 and presses the second elastic part 27. Since the space of the second opening groove 25 at the unlocking end is large, when the second movement body 23 moves to the unlocking end, there is a gap between the second movement body 23 and the driving assembly, that is, the second movement 23 is unlocked. When the driving assembly rotates from the locking end to the unlocking end of the first movement surface 24-1, the driving assembly drives the first movement body 22 to move towards the unlocking end along the first movement surface 24-1 and presses the first elastic part 26. Since the space of the first opening groove 24 at the unlocking end is large, when the first movement body 22 moves to the unlocking end, there is a gap between the first movement body 22 and the driving assembly, that is, the first movement body 22 is unlocked. At the same time, the second movement body 23 moves along the second movement surface 25-1 towards the locking end under the elastic force of the second elastic part 27. When the second movement body 23 arrives at the locking end, it contacts with the driving assembly and is locked on the driving assembly. At this time, the driving assembly and the locking component 2 rotate synchronously, which plays a role of bidirectional locking.

In order to facilitate applying uniform force on the driving assembly, in a specific embodiment, there are a plurality of first opening grooves 24, the plurality of first opening grooves 24 are provided at an interval on the inner wall of the housing 21, and a direction of length of the plurality of first opening grooves 24 extends along an axial direction of the housing 21.

In order to facilitate applying uniform force on the driving assembly, in a specific embodiment, there are a plurality of second opening grooves 25, the plurality of second opening grooves 25 are provided at an interval on the inner wall of the housing 21, and a direction of length of the plurality of second opening grooves 24 extends along an axial direction of the housing 21.

In a specific embodiment, the first opening grooves 24 and the second opening grooves 25 are provided in pairs, and in a pair of the first opening groove 24 and the second opening groove 25, the extension of the first movement surface 24-1 of the first opening groove 24 and the extension of the second movement surface 25-1 of the second opening groove 25 are intersected. By providing the first opening groove 24 and the second opening groove 25 in pairs, it is convenient for the driving assembly to force uniformly.

Wherein, in the first opening groove 24, a maximum width between the sidewalls located on two opposite sides of the groove bottom is larger than a width of the opening. For example, the first opening groove 24 has a structure of its opening smaller than its inner space. From cross section views of FIGs.1-2, 4 and 5, the first opening groove 24 is narrowing from the inside to the opening. A diameter of the first movement body 22 is larger than the width of the opening of the first opening groove 24 and smaller than the maximum width between the sidewalls located on two opposite sides of the groove bottom of the first opening groove 24, such that after installing the first movement body 22 in the first opening groove 24, the first movement body 22 will not be detached from the opening, thus improving the stability after installation.

In order to facilitate the installation of the first elastic part 26, in a specific embodiment, a sidewall at the unlocking end of the first movement surface 24-1 of the first opening groove 24 is provided with a first installation groove which is configured to install the first elastic part 26. A tilt direction of the first installation groove is consistent with that of the first movement surface 24-1. Further, an inclination angle of the first installation groove can be set to be consistent with that of the first movement surface 24-1, so as to facilitate the elastic force of the first elastic part 26 acting to be applied onto the first movement body 22.

Wherein, in the second opening groove 25, a maximum width between the sidewalls located on two opposite sides of the groove bottom is larger than a width of the opening. For example, the second opening groove 25 also has a structure of its opening smaller than its inner space. From cross section views of FIGs.4-5, the second opening groove 25 is narrowing from the inside to the opening. A diameter of the second movement body 23 is larger than the width of the opening of the second opening groove 25 and smaller than the maximum width between the sidewalls located on two sides relative to the groove bottom of the second opening groove 25, such that after installing the second movement body 23 in the second opening groove 25, the second movement body 23 will not be detached from the opening, thus improving the stability after installation.

In a specific embodiment, a sidewall at the unlocking end of the second movement surface 25-1 of the second opening groove 25 is provided with a second installation groove which is configured to install the second elastic part 27. A tilt direction of the second installation groove is consistent with that of the second movement surface 25-1. Similarly, an inclination angle of the second installation groove can be set to be consistent with that of the second movement surface 25-1, so as to facilitate the elastic force of the second elastic part 27 to be applied onto the second movement body 23.

In order to facilitate reliable locating of the first movement body 22 at the locking end, in a specific embodiment, a sidewall at the locking end of the first movement surface 24-1 of the first opening groove 24 is constructed to a first arc surface matched with an outer surface of the first movement surface 22. For example, when the outer surface of the first movement body 22 is cylindrical, the first arc surface is also cylindrical matched with the first movement body 22.

In order to facilitate reliable locating of the second movement body 23 at the locking end, in a specific embodiment, a sidewall at the locking end of the second movement surface 25-1 of the second opening groove 25 is constructed to a second arc surface matched with an outer surface of the second movement surface 23. For example, when the outer surface of the second movement body 23 is cylindrical, the second arc surface is also cylindrical matched with the second movement body 23.

In a specific embodiment, the first movement body 22 and the second movement body 23 can be roller pins, rollers or balls. The first elastic part 26 and the second elastic part 27 can be springs. The specific form of spring is not limited, which can be compression spring or leaf spring. The spring used in this embodiment is leaf spring with two ends bent by a certain angle.

In a specific embodiment, at least one end of the housing 21 along the axial direction is provided with an end cover 28, so that a movement body or an elastic part will not be separated from ends of the housing 21 after installation. The end cover 28 is provided with a central through hole whose inner diameter is not less than that of the axial through hole of the housing 21 to ensure that the driving assembly such as the driving shaft 4 can be smoothly inserted into the axial through hole of the housing 21 and contact with the inner wall of the housing 21.

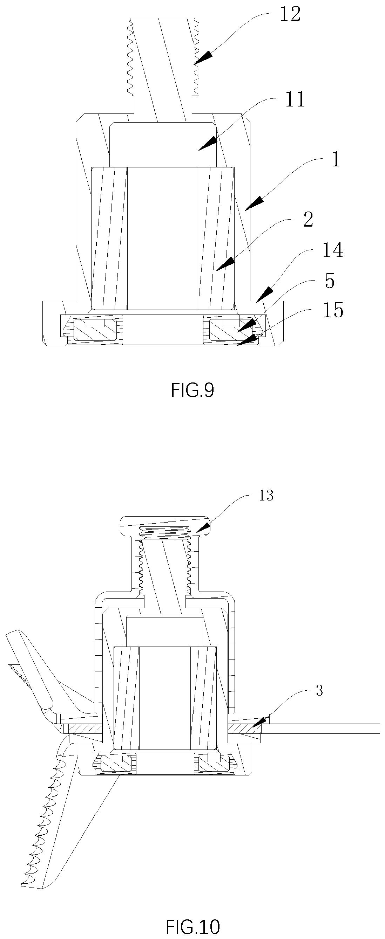

In a second aspect, refer to FIGs.9-10, the embodiments of the present application provide a rotary head, including:
an installation sleeve 1, which has an installation space 11 on a lower end;
the locking component 2, which is fixed in the installation space 11 through the housing 21; and
a rotating actuator 3, which is sleeved on an outer side of the installation sleeve 1.

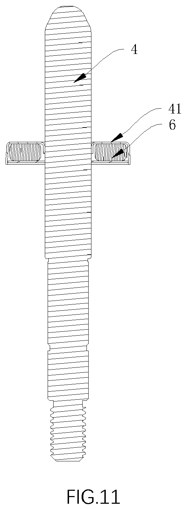

Refer to FIGs.11-12, the rotary head is sleeved on the driving assembly, specifically, on the driving shaft 4. The first movement body 22 contacts with the driving shaft 4. When rotating the driving shaft 4 to make the first movement body 22 lock on the driving shaft 4, the rotary head can rotate synchronously with the driving shaft 4. And when rotating the driving shaft 4 reversely to drive the first movement body 22 to move to the unlocking end, there is a gap between the first movement body 22 and the driving shaft 4. When the driving shaft 4 rotates, the rotary head is fixed, thereby realizing the unidirectional locking and convenient disassembly of the rotary head.

In addition, a pair of coaxial locking components with opposite directions can be installed in the installation sleeve 1, such as two unidirectional bearings, so that the bidirectional locking of the rotary head can be realized, that is, the driving assembly can drive the rotary head to synchronously rotate forward or reverse. For occasions where the rotary head needs to rotate forward and reverse, requirements can be met by providing two unidirectional bearings with opposite directions in the installation sleeve 1.

For case that the locking component 2 has the second opening groove 25, the second movement body 23 and the second elastic part 27, the rotating head is sleeved on the driving assembly, specifically, on the driving shaft 4. Both the first movement body 22 and the second movement body 23 contact with the driving shaft 4, thereby realizing bidirectional locking of the locking component 2 and the driving shaft 4, and ensuring that the locking component 2 can rotate synchronously with the driving shaft 4 in both forward and reverse directions; when the outside of the housing 21 fixed with a rotary head, the rotary head can rotate synchronously with the driving assembly in forward and reverse directions. Due to existence of locking force of the first movement body 22 or the second movement body 23, it can ensure that the rotary head will not be separated from the driving shaft 4 when rotating forwardly or reversely, and the connection is reliable and the use is safe.

When the driving shaft 4 does not rotate, the rotary head can be directly removed along the axial direction of driving shaft 4, so that the rotary head is easy to disassemble, and to be cleaned. Moreover, the installation sleeve 1, the locking component 2 and the rotating actuator 3 form an assembly, and the rotary head is disassembled as a whole during disassembly and assembly. There are no other extra parts, which avoids the situations where one or more parts are missing. The disassembly and assembly are fast, and it does not need disassembly tools or the users' checking whether the disassembly and assembly are in place. And repeated disassembly and assembly are available.

In addition, the locking component 2 is used as a part connected to the driving assembly, when the rotary head works, the first movement body 22 or the second movement body 23 is always stuck on the outer wall of the driving assembly, which can ensure that there is no gap between the driving assembly and the housing 21, thereby reducing noise and vibration of the rotary head during rotation and reducing the heat conduction between the rotary head and the driving assembly.

In order to ensure that there is no relative displacement between the installation sleeve 1 and the locking component 2 after assembly, and to ensure that the installation is convenient, in a specific embodiment, the inner surface of the installation space 11 is provided with a first structure, and the outer surface of housing 21 is provided with a second structure matching the first structure. After the housing 21 is assembled in the installation space 11, the locking component 2 is fixed on the inner surface of the installation sleeve 1. The first structure and the second structure are in a matching state, so as to drive the locking component 2 to rotate together when the installation sleeve 1 rotates along the axial direction.

Specifically, the first structure can be a convex part, a concave part or a plane part or a combination thereof constructed on the inner surface of the installation space 11. Accordingly, the second structure is a concave part, a convex part or a plane part or a combination thereof constructed on the outer surface of the housing 21.

It can be understood that the first structure can be a convex tooth or a plurality of convex teeth arranged at an interval formed on the inner surface of the installation space 11, or a groove or a plurality of grooves arranged at an interval formed on the inner surface of the installation space 11, or a plane or a plurality of planes formed on the inner surface of the installation space 11. And, the first structure can also be any combination of convex tooth, groove and plane, such as the combination of plane and convex tooth, or a combination of groove and plane, or a combination of convex tooth and groove, or a combination of convex tooth, groove and plane. Accordingly, the second structure is a groove, convex tooth or plane matching the first structure. The convex part can have other convex shapes, not limited to the convex tooth shape, and the shape of the concave part can be flat bottom groove or arc groove, the specific shape of the concave part can be set as required.

Specifically, the installation space 11 is a noncircular hole and the outer surface of the housing 21 is a noncircular surface.

In a specific embodiment, the noncircular hole can be polygonal hole, elliptical hole, or quasi-circular hole with at least one flat surface, etc. The specific form of the noncircular hole is not limited.

Of course, fixed installation methods of the installation sleeve 1 and the locking component 2 are not limited to above assembly methods. A fixed installation of the installation sleeve 1 and the locking component 2 can be realized in the following manner: the installation space 11 of installation sleeve 1 is a circular hole, the installation space 11 is in interference fit with the housing 21, or the installation sleeve 1 is provided with a spiral groove/spiral convex, and the housing 21 is provided with a spiral convex/spiral groove to match the spiral groove/spiral convex of the installation sleeve 1.

In a specific embodiment of the present application, an upper end of the installation sleeve 1 bulges upwards to form a connecting portion 12, such as a connecting column. An annular convex platform 14 is constructed outside the installation sleeve 1 at an opening side of the installation space 11, the rotating actuator 3 is sleeved outside the installation sleeve 1 and is supported against on the annular convex platform 14. The annular convex platform 14 plays a supporting role for the rotating actuator 3. The connecting portion 12 is detachably connected to a handle sleeve 13. For example, an external thread is provided on the connecting column, an internal thread is provided on a corresponding location of the handle sleeve 13, and the handle sleeve 13 and the connecting column are connected by thread to realize the detachable connection. The handle sleeve 13 is sleeved on an outer side of the installation sleeve 1, and is pressed on the rotating actuator 3, so as to press and fix the rotating actuator 3. In addition, the handle sleeve 13 is provided to facilitate the hand holding, so that when disassembling or assembling the rotary head, users' hands will not contact the rotating actuator 3.

In addition, the handle sleeve 13 can also be directly formed on the connecting portion 12, that is, the handle sleeve 13 and the connecting portion 12 is an integrated structure.

The locking component 2 is compact in size and occupies a small space of the installation sleeve 1, so it is beneficial to reduce a volume of the installation sleeve 1 and a volume of the whole rotary head, and to compact structure and miniaturization of the rotary head.

In a specific embodiment of the present application, the rotary head can further include a sealing part 15, which is provided at a lower end of the locking component 2 to prevent residue from entering the inner of the locking component 2 and thus affecting service life and performance of the locking component 2.

In order to facilitate locating of the sealing part 15, the sealing part 15 is at least partially provided in the installation space 11, and is located at an opening side of the installation sleeve 1. The sealing part 15 can be a sealing ring. A peripheral of the sealing ring and an inner circumference of the lower end of the installation space 11 is in interference fit, a center of the sealing ring is provided with a hole for the driving assembly to pass through, and a sealing surface of the sealing ring is close to a lower surface of the locking component 2.

As shown in FIGs.9-10, in a specific embodiment of the present application, the rotary head also includes a first magnetic part 5, and the first magnetic part 5 is fixed at the opening side of the installation space 11. In this embodiment, the first magnetic part 5 is provided in the installation sleeve 1 and close to a lower end of the locking component 2. In addition, for case of providing the sealing part 15, the sealing part 15 is provided between the locking component 2 and the first magnetic part 5. The installation position of the first magnetic part 5 is not limited in the installation sleeve 1, but also can be sleeved on an outer side of the installation sleeve 1 near the opening side. Since the rotary head has the first magnetic part 5, when assembling the rotary head, the first magnetic part 5 is closest to the driving assembly, and then the rotary head can be fixed on the driving assembly through attraction cooperation between the first magnetic part 5 and corresponding magnetic part on the driving assembly, so as to prevent the rotary head from separating from the driving assembly under specific conditions such as large tilt angle.

Wherein, the first magnetic part 5 refers to an object that can react in some way to a magnetic field and does not require itself to have a capacity of producing a magnetic field. The first magnetic part 5 can be prepared by any magnetic material, such as magnet, low carbon steel, etc. Of course, the first magnetic part 5 can also be an electrified coil. Similarly, the second magnetic part 6 mentioned below can also be prepared by any magnetic material or in a form of an electrified coil. Specific forms of the first magnetic part 5 and the second magnetic part 6 are not limited, as long as the first magnetic part 5 and the second magnetic part 6 can produce magnetic attraction.

In a specific embodiment of this application, the rotating actuator 3 can include rotating knife, rotating hook, rotating claw, rotating rod, rotating paddle or any combination thereof. For example, soybean milk machine, high speed blender and juice extractor are generally equipped with rotating knife; and dough kneading machine is generally equipped with rotating hook. In addition, paint mixing machine, pretreatment system of crop fermentation raw material and powder coating mixer, etc., are generally equipped with rotating hook; superhard abrasive mixing machine, egg beater, food machine, biological fertilizer mixing machine, etc., are generally equipped with the rotating claw; and reaction still, food machine, etc., are generally equipped with the rotating rod; and mixing machine, reaction are generally equipped with rotating paddle.

In addition, according to various use requirements, a combination of a variety of rotating actuator 3, such as rotating knife and rotating paddle, can be used to achieve better effect of cutting and stirring.

In addition, the embodiments of the present application further provide a rotary assembly. As shown in FIGs.11-12, the rotary assembly includes the driving assembly and the rotary head, wherein, the rotary head is sleeved on the driving assembly; the first movement body 22 contacts with the driving assembly. When rotating the driving assembly towards the locking end, the first movement body 22 is locked on the driving assembly and rotates synchronously with the driving assembly. When reversely rotating the driving assembly, the first movement body 22 moves towards the unlocking end along the first movement surface 24-1 and presses the first elastic part 26. And there is a gap between the first movement body 22 and the driving assembly. When the driving assembly rotates, the rotary head is fixed and a unidirectional locking of the rotary head is realized.

In addition, for case that the locking component 2 is provided with the first opening groove 24, the second opening groove 25 and the corresponding parts, the locking component 2 can realize bidirectional locking, so that the rotary head and the driving assembly can realize bidirectional locking, which ensures that the rotary head is not separated from the driving assembly during forward or reverse rotation, connection is reliable and use is safe.

When the rotary head needs to be detached, the rotary head can be pulled directly from the driving assembly, so that the rotary head is easy to disassemble and clean. Moreover, the installation sleeve 1, the locking component 2 and the rotating actuator 3 form an assembly, and the rotary head is disassembled as a whole during disassembly and assembly. There are no other extra parts, which avoids the existence of one or more parts being forgotten. The disassembly and assembly can be performed fast without disassembly tools, and after the disassembly and assembly, the user doesn't need to check whether the disassembly and assembly are in place. And a repeated disassembly and assembly are available. In addition, it's easy to assemble or disassemble without checking or interfering with an orientation of the driving assembly.

In addition, a separation force required for disassembling the rotary head is less than 20 N, and the rotary head can be directly pulled out by hand without using a tool.

In a specific embodiment, the driving assembly such as the driving shaft 4 can be a rotating body, such as a bare shaft, without key groove, key and other complex structure thereon. When assembling, the driving shaft 4 can be directly inserted into the housing 21, without alignment. Thus the installation is very simple and fast.

The above rotary assembly can be applied to low speed and high speed range of 1 RPM (Revolutions Per Minute abbreviation) ^{~} 40000 RPM.

In a specific embodiment, as shown in FIG.11, the rotary assembly further includes the second magnetic part 6, which is fixed on the driving assembly and is provided opposite to the first magnetic part 5 of the rotary head, and the first magnetic part 5 and the second magnetic part 6 attract each other by magnetic force. Specific material of the first magnetic part 5 and the second magnetic part 6 are not limited. In an embodiment, the first magnetic part 5 is made from low carbon steel such as low carbon steel retaining ring, and the second magnetic part 6 is made from magnet, so that it will produce mutual attraction between low carbon steel retaining ring and magnet, which ensures that the rotary head will not separate from the driving assembly even in a dumping state, making it user-friendly.

In a specific embodiment of the present application, in order to locate and support the lower end of the locking component 2 and avoid downward movement of the locking component 2, a locating shaft shoulder is provided on the driving assembly, and the bottom of the inner circumference of the locking component 2 is leaned against on the locating shaft shoulder. For case of providing a sealing ring at the lower end of the locking component 2, the bottom of the sealing ring is leaned against on the locating shaft shoulder, which plays a role of locating and supporting for the locking component 2 and the sealing ring.

Furthermore, as shown in FIG.11, an annular hollow cover body 41 is arranged on the driving shaft 4, and a locating shaft shoulder is formed between an upper surface of the annular hollow cover body 41 and the driving shaft 4. The annular hollow cover body 41 can be integrated with the driving shaft 4. An outer diameter of the annular hollow cover body 41 needs to be greater than an inner diameter of the locking component 2. In order to facilitate the installation of the second magnetic part 6, the second magnetic part 6 can be provided in a cavity of the annular hollow cover body 41.

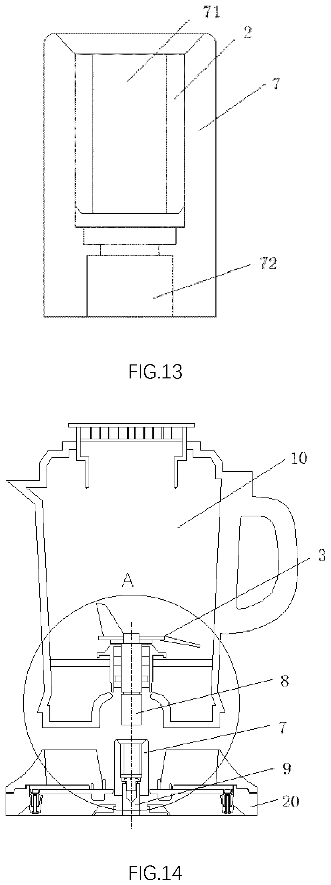

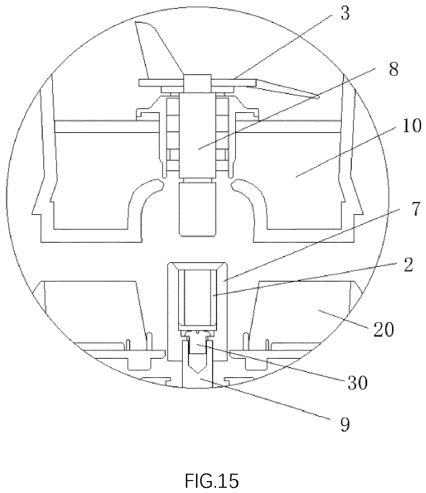

In addition, the present application further provides a container, as shown in FIGs.14-15, which comprising a container body 10 and the above rotating assembly. An end of the driving assembly is installed in the container body 10. Specifically, the bottom of the container body 10 can be provided with an installation space 11, the driving assembly is to connect electrically to a driving mechanism such as driving motor after running through the installation space 11. The connection between the driving assembly and the installation space 11 is sealed to ensure no leakage. The rotary head is sleeved at another end of the driving assembly through the housing 21. The driving assembly is driven to rotate by the driving motor, thus driving the rotating head to rotate. In addition, in order to avoid providing holes at the bottom of the container body 10, an output shaft end of the driving motor can be provided with a first coupler. The first coupler is located at a bottom outside the container body 10, and a lower end of the driving assembly in the container body 10 is provided with a second coupler. The driving motor drives the first coupler to rotate to generate magnetic force to drive the second coupler to rotate, thereby driving the rotation of the driving assembly and the rotary head.

For the container provided by this embodiment, by providing the driving assembly and the rotary head sleeved on the driving assembly in the container body 10, the rotary head can realize reliable connection with the driving assembly when working, and the rotary head can be pulled out directly when it needs to be disassembled. Thus the rotary head is convenient to disassemble and clean. It is also convenient to clean a bottom of the container after the rotary head is removed, so as to avoid the residue gathering at the bottom of the container, especially near the bottom of the driving assembly, thereby the container can be cleaned thoroughly and there isn't any sanitary dead angle, then the user's inconvenience can be solved and the users' satisfaction can be improved.

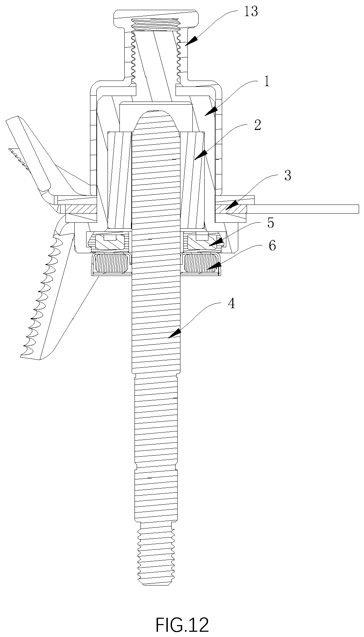

In addition, as shown in FIG.12, due to magnetic attraction between the first magnetic part 5 and the second magnetic part 6, the rotary head can be avoided sliding due to gravity when the container is tilting.

On another hand, the embodiments of the present application provide a food processor, which comprises the above container. The food processor can be soybean milk machine, high speed blender, juice extractor, egg beater, dough kneading machine, food mixer, air fryer, shredder, filament planer, self-cooking pan, frying pan, soup-making machine or self-frying pan, etc. The rotary head of the food processor can be reliably connected to the driving assembly when working, which improves the safety of use. It is convenient to disassemble when cleaning is needed, which is also convenient to remove the rotary head and clean the bottom of the food processor after removing the rotary head. Thus, the food processor can be thoroughly cleaned without any sanity dead angle. Moreover, it is safe to use and will not cut users' hands, which improves users' satisfaction and the premium capacity of product.

In addition, when materials in the food processor needs to be dumped, due to the magnetic attraction between the first magnetic part 5 and the second magnetic part 6, the rotary head can be avoided from sliding due to gravity. Thus it's convenient to use.

What's more, refer to FIG.13, embodiments of the present application further provide a shaft coupling, including a shaft coupling body 7. A first end of the shaft coupling body 7 is provided with a first connecting hole 71 and a second end of the shaft coupling body 7 is provided with a second connecting hole 72. The shaft coupling further includes:
the locking component 2, and the specific structure of the locking component 2 is shown in FIGs.1-8, which is not repeated here; and
the housing 21 is fixed in the first connecting hole 71, and is sleeved on the first driving shaft assembly. When installing, it is only need to insert the first driving shaft assembly in the housing 21 or sleeve the housing 21 on the first driving shaft assembly. The installation is very convenient and fast, without alignment and without adjusting an installation angle. By providing the locking component 2 as a part connected to the first driving shaft assembly, the first movement body 22 is always locked in an outer wall of the first driving shaft assembly when the shaft coupling works, which can ensure that there is no gap between the first driving shaft assembly and the housing21, thereby reducing noise and vibration of the shaft coupling during rotation.

In this embodiment, the first driving shaft assembly being the first driving shaft 8 is taken as an example to illustrate.

The second connecting hole 72 is fixedly connected to the second driving shaft assembly, and the housing 21 can be synchronously rotated by rotating the second driving shaft assembly. Therefore, when the housing 21 needs to be rotated, it is only necessary to rotate the second driving shaft assembly.

In a specific embodiment, the first connecting hole 71 and the second connecting hole 72 are coaxially arranged and disconnected from each other, so as to facilitate respective installation of the first driving shaft assembly and the second driving shaft assembly without mutual interference.

On another hand, embodiments of the present application further provide a rotary assembly. As shown in FIGs.14-15, the rotary assembly includes a first driving shaft assembly and a second driving shaft assembly, and further includes: the shaft coupling which is fixedly connected to the second driving shaft assembly and is sleeved on the first driving shaft assembly through the housing 21. It's very convenient to assemble, without alignment and without adjusting an installation angle.

When the shaft coupling and the first driving shaft assembly need to be disassembled, only a small force is required to separate the shaft coupling and the first driving shaft assembly, which is easy to disassemble.

In addition, the first driving shaft assembly such as the first driving shaft 8 can be a rotating body, such as a bare shaft without key groove, key and other complex structure thereon. When assembling, the first driving shaft 8 only needs to be directly inserted into the housing 21, without alignment. Thus the installation is very simple and fast.

The second driving shaft assembly is fixedly connected to the second connecting hole 72 through a fastening part 30, and an upper end of the second driving shaft assembly can be provided with the installation space 11. One end of the fastening part 30, such as a screw, is fixed in the installation space 11, and the other end of the fastening part 30 is fixed in the second connecting hole 72, thereby realizing a fixed connection between the second driving shaft assembly and the shaft coupling. The second driving shaft assembly can be the second driving shaft 9 or a structure of a shaft sleeve outside the second driving shaft 9.

As shown in FIG.14-15, embodiments of the present application further provide a container, including a container body 10, such as a stirring cup, and a base 20, and a rotary assembly. One of the first driving shaft assembly and the second driving shaft assembly is connected to the container body 10 and extends into the container body 10, and the other of the first driving shaft assembly and the second driving shaft assembly is connected to the base 20.

That is, if the first driving shaft assembly is connected to the container body 10, the second driving shaft assembly is connected to the base 20, and accordingly, if the second driving shaft assembly is connected to the container body 10, the first driving shaft assembly is connected to the base 20. In this embodiment, the first driving shaft 8 is connected to the container body 10, the second driving shaft 9 is connected to the base 20, and the container body 10 is used as a moving part. A lower end of the first driving shaft 8 is inserted into the housing 21 of the locking component 2 on the base 20, and the assembly and the disassembly are convenient.

Of course, the second driving shaft 9 can be connected to the container body 10, a lower end of the second driving shaft 9 is fixedly connected to the shaft coupling, the first driving shaft 8 is connected to the base 20. And when the container body 10 is connected to the base 20, the container body 10 drives the housing 21 to be sleeved on the first driving shaft assembly.

In this embodiment, the first driving shaft assembly only needs to be inserted into the housing 21 during installation, which is easy to install and does not need to rotate the container body 10 to adjust an angle. The installation is fast, time-saving and labor-saving. When working, the housing 21 can be clamped with the first driving shaft assembly to ensure that there is no gap between the first driving shaft assembly and the housing 21. When rotating, it is more stable, with small vibration and noise, and relatively small heat generation, which solves inconvenience of users.

Specifically, one end of the first driving shaft assembly or the second driving shaft assembly extended into the container body 10 is provided with a rotating actuator 3; the base 20 is provided with a power mechanism such as a motor; an end of the first driving shaft assembly or the second driving shaft assembly connected to the base 20 is connected to the power mechanism; or an output shaft of the power mechanism can be used as the first driving shaft assembly or the second driving shaft assembly connected to the base 20.

In a specific embodiment, an end of the first driving shaft assembly or the second driving shaft assembly extending into the container body 10 is provided with the rotating actuator 3; the base 20 is provided with a power mechanism; and an end of the first driving shaft assembly or the second driving shaft assembly connected to the base 20 is connected to the power mechanism.

On another hand, embodiments of the present application provide a food processor, such as soybean milk machine, high speed blender, juice extractor, egg beater, dough kneading machine, food mixer, air fryer, shredder, filament planer, self-cooking pan, frying pan, soup-making machine or self-frying pan, etc., which includes a container. As shown in FIGs.14-15, by using the above container in the food processor, the container body 10 and the base 20 can be fast connected and conveniently disassemble. It ensures that there is no gap between the shaft coupling and the first driving shaft assembly when the food processor is working, the rotation is more stable with small vibration, noise and relatively small heat generation, which improves users' satisfaction and the premium capacity of product.

According to the above embodiments, the locking component 2 can realize both one-way locking, and two-way locking, and is easy to be detached; the rotary head is easy to disassemble and assemble, easy to clean, and safe to use, and can be automatically locked with the driving assembly when the rotary head is working, thereby the connection is reliable, and working stability and safety are improved.

The shaft coupling of the embodiments of the present application is easy to disassemble and assemble, and the shaft coupling can be automatically locked with the first driving shaft assembly when working, thereby the connection is reliable, working stability is improved, vibration and noise are reduced, and the heat generation is relatively small.

The above-mentioned are only preferred embodiments of the present application, and are not intended to limit the present application. Any modifications, equivalent substitutions, and improvements made within the concept of the present application shall be included in the protection scope of the present application.

## Claims

1. A locking component, comprising:
a housing, wherein, an inner wall of the housing is provided with a first opening groove, a bottom of the first opening groove is provided with a first movement surface, an end of the first movement surface proximal to an opening of the first opening groove is a locking end, and an end of the first movement surface distal to the opening of the first opening groove is an unlocking end;
a first movement body, provided in the first opening groove and moveable along the first movement surface; and
a first elastic part, provided in the first opening groove, wherein the first elastic part is capable of maintaining the first movement body at the locking end or the unlocking end of the first movement surface.

2. The locking component according to claim 1, wherein, the inner wall of the housing is further provided with a second opening groove, a bottom of the second opening groove is provided with a second movement surface, and a tilt direction of the second movement surface is opposite to a tilt direction of the first movement surface;
an end of the second movement surface proximal to an opening of the second opening groove is a locking end, and an end of the second movement surface distal to the opening of the second opening groove is an unlocking end;
a second movement body is provided in the second opening groove, and the second movement body is moveable along the second movement surface; and
a second elastic part is provided in the second opening groove, and the second elastic part is capable of maintaining the second movement body at the locking end or the unlocking end of the second movement surface.

3. The locking component according to any one of claims 1-2, wherein a plurality of the first opening grooves are provided, the plurality of first opening grooves are disposed at an interval on the inner wall of the housing, and a length direction of the plurality of first opening grooves extends along an axial direction of the housing.

4. The locking component according to claim 2, wherein, a plurality of the second opening grooves are provided, the plurality of second opening grooves are disposed at an interval on the inner wall of the housing, and a length direction of the plurality of second opening grooves extends along an axial direction of the housing.

5. The locking component according to claim 2, wherein, the first opening groove and the second opening groove is provided in pair

6. The locking component according to claim 1, wherein, the first elastic part is installed at the unlocking end of the first movement surface or at a position near the unlocking end of the first movement surface; the first elastic part, when in a natural state, maintains the first movement body at the locking end of the first movement surface, and an outer surface of the first movement body facing towards the opening of the first opening groove is tangent to a circumference of the inner wall of the housing.

7. The locking component according to claim 2, wherein, the second elastic part is installed at the unlocking end of the second movement surface or at a position near the unlocking end of the second movement surface; the second elastic part, when in a natural state, maintains the second movement body at the locking end of the second movement surface, and an outer surface of the second movement body towards the opening of the second opening groove is tangent to a circumference of the inner wall of the housing.

8. The locking component according to any one of claims 1-2, wherein, a maximum width between opposite sidewalls of the first opening groove is larger than a width of the opening of the first opening groove, and a diameter of the first movement body is larger than the width of the opening of the first opening groove and smaller than the maximum width between the opposite sidewalls of the first opening groove.

9. The locking component according to any one of claims 1-2, wherein, a sidewall of the first opening groove at the unlocking end of the first movement surface is provided with a first installation groove of the first elastic part, and a tilt direction of the first installation groove is consistent with the tilt direction of the first movement surface.

10. The locking component according to claim 2, wherein, a maximum width between opposite sidewalls of the second opening groove is larger than a width of the opening of the second opening groove, and a diameter of the second movement body is larger than the width of the opening of the second opening groove and smaller than the maximum width between the opposite sidewalls of the second opening groove.

11. The locking component according to claim 2, wherein, a sidewall of the second opening groove at the unlocking end of the second movement surface is provided with a second installation groove of the second elastic part, and a tilt direction of the second installation groove is consistent with the tilt direction of the second movement surface.

12. The locking component according to any one of claims 1-2, wherein, a sidewall of the first opening groove at the locking end of the first movement surface is constructed as a first arc surface matching an outer surface of the first movement body.

13. The locking component according to claim 2, wherein, a sidewall of the second opening groove at the locking end of the second movement surface is constructed as a second arc surface matching an outer surface of the second movement body.

14. The locking component according to claim 2, wherein, both the first movement body and the second movement body are roller pins, rollers or balls, and both the first elastic part and the second elastic part are springs.

15. The locking component according to any one of claims 1-2, wherein, at least one end along an axial direction of the housing has an end cover, the end cover has a central through hole, and an inner diameter of the central through hole is not small than that of an axial through hole of the housing.

16. A rotary head, comprising:
an installation sleeve, a lower end of the installation sleeve having an installation space;
a locking component according to any one of claims 1-15, fixed in the installation space through a housing; and
a rotating actuator, fixed outside the installation sleeve.

17. The rotary head according to claim 16, wherein, an upper end of the installation sleeve bulges upwards to form a connecting portion; and
an annular convex platform is constructed outside the installation sleeve at an opening side of the installation space, the rotating actuator is sleeved on an outer side of the installation sleeve and abuts on the annular convex platform, the connecting portion is connected to a handle sleeve, and the handle sleeve is sleeved on the outer side of the installation sleeve and is pressed tightly on the rotating actuator.

18. The rotary head according to claim 16, the rotary head further comprising a sealing part, wherein, the sealing part is provided at a lower end of the locking component;
the sealing part is at least partially disposed in the installation space and located at an opening side of the installation space; and/or
the rotary head further comprising a first magnetic part, fixed at the opening side of the installation space.

19. A rotary assembly, comprising a driving assembly, the rotary assembly further comprising:
a rotary head according to any one of claims 16-18, sleeved on the driving assembly, wherein the driving assembly in contact with a first movement body.

20. The rotary assembly according to claim 19, further comprising a second magnetic part, fixed on the driving assembly and is provided opposite to a first magnetic part of the rotary head, wherein the first magnetic part and the second magnetic part magnetically attract each other.

21. A container, comprising a container body, the container further comprising:
a rotary assembly according to any one of claims 19-20, wherein an end of a driving assembly is installed in the container body, and a rotary head is sleeved at an other end of the driving assembly.

22. A food processor, comprising a container according to claim 21.

23. A shaft coupling, comprising a shaft coupling body, wherein a first end of the shaft coupling body is provided with a first connecting hole and a second end of the shaft coupling body is provided with a second connecting hole; the shaft coupling further comprising:
a locking component according to any one of claims 1-15; wherein
a housing is fixed in the first connecting hole and is sleeved on a first driving shaft assembly, and the second connecting hole is fixedly connected to a second driving shaft assembly.

24. The shaft coupling according to claim 23, wherein, the first connecting hole and the second connecting hole are coaxially arranged and not communicated with each other.

25. A rotary assembly, comprising a first driving shaft assembly and a second driving shaft assembly; the rotary assembly further comprising: a shaft coupling according to any one of claims 23-24, wherein, the shaft coupling is sleeved on the first driving shaft assembly through a housing, a first movement body contacts with the first driving shaft assembly, and the second driving shaft assembly is fixedly connected to a second connecting hole.

26. A container, comprising a container body and a base, the container further comprising: a rotating assembly according to claim 25, wherein, either a first driving shaft assembly or a second driving shaft assembly is connected to the container body and extends into the container body, and the other one of the first driving shaft assembly and the second driving shaft assembly is connected to the base.

27. The container according to claim 26, wherein, an end of the first driving shaft assembly or the second driving shaft assembly extended into the container body is provided with a rotating actuator; the base is provided with a power mechanism; and an end of the first driving shaft assembly or the second driving shaft assembly connected to the base is connected to the power mechanism.

28. A food processor, comprising a container according to any one of claims 26-27.
